(19) Europäisches Patentamt
European Patent Office
Office européen des brevets

(11) Veröffentlichungsnummer: **0 087 392**
**B1**

# (12) EUROPÄISCHE PATENTSCHRIFT

(45) Veröffentlichungstag der Patentschrift: **18.12.85**

(51) Int. Cl.⁴: **C 07 C 125/08**, C 08 G 59/40, C 08 F 26/02

(21) Anmeldenummer: **83810067.5**

(22) Anmeldetag: **17.02.83**

## (54) Cyanacylamidverbindungen und Verfahren zu ihrer Herstellung.

(30) Priorität: **23.02.82 CH 1104/82**

(43) Veröffentlichungstag der Anmeldung: **31.08.83 Patentblatt 83/35**

(45) Bekanntmachung des Hinweises auf die Patenterteilung: **18.12.85 Patentblatt 85/51**

(84) Benannte Vertragsstaaten: **CH DE FR GB LI**

(56) Entgegenhaltungen:
**JOURNAL OF ORGANIC CHEMISTRY, Band 28, Mai-August 1963, Seiten 1816-1821, Cambridge, MA, US K. HUFFMAN et al.: "N-Cyanoimidates"**

(73) Patentinhaber: **CIBA-GEIGY AG, Klybeckstrasse 141, CH-4002 Basel (CH)**

(72) Erfinder: **Stockinger, Friedrich, Stutzrain 4, CH-4434 Hölstein (CH)**
Erfinder: **Lohse, Friedrich, Prof. Dr., Buchenstrasse 23, CH-4104 Oberwil (CH)**
Erfinder: **Moser, Roland, Säckingerstrasse 10, CH-4058 Basel (CH)**

EP 0 087 392 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue N-Cyanacylamidverbindungen, Verfahren zu ihrer Herstellung und ihre Verwendung.

Dualfunktionelle Verbindungen, das heisst, Verbindungen mit zwei voneinander verschieden funktionellen und reaktiven Gruppen im Molekül, sind für Applikationen, bei denen B-Stufenharze erforderlich sind, wie zum Beispiel zur Herstellung von Prepregs oder Verbundstoffen, von besonderem Interesse. Dualfunktionelle Verbindungen, die zum Beispiel eine polymerisierbare Doppelbindung und eine Glycidylgruppe oder reaktive N-heterocyclische Gruppe im Molekül enthalten, sind aus der GB-PS 1 405 539 bzw. aus der DE-OS 2 334 826 bekannt. Die aus solchen Monomeren durch Polymerisation der Doppelbindung erhaltenen linearen Polymeren mit mehreren Glycidylgruppen bzw. reaktiven N-heterocyclischen Gruppen im Molekül können nur mit einem zusätzlichen Härtungsmittel bzw. Vernetzungsmittel in den duroplastischen Zustand gebracht werden.

Aufgabe der vorliegenden Erfindung war daher die Bereitstellung von neuen dualfunktionellen Verbindungen, die sich in zweistufigen Umsetzungsreaktionen problemloser zu Duroplasten überführen lassen und somit mehr Anwendungsmöglichkeiten aufweisen, zum Beispiel auch zur Herstellung von Prepregs und Verbundstoffen geeignet sind.

Es wurde nun gefunden, dass bestimmte N-Cyanacylamidverbindungen, die im Molekül eine polymerisierbare Doppelbindung und eine thermovernetzbare Cyanamidgruppe enthalten, diesen Anforderungen entsprechen.

Gegenstand der vorliegenden Erfindung sind somit N-Cyanacylamidverbindungen der Formel I

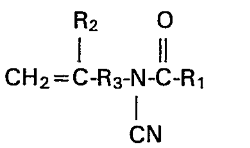 (I)

worin $R_1$ ein Wasserstoffatom, Alkyl mit 1-20 C-Atomen, Cycloalkyl mit 5-8 C-Atomen oder Aryl mit 6 oder 10 Ring-C-Atomen, $R_2$ ein Wasserstoffatom oder Alkyl mit 1-4 C-Atomen und $R_3$ ein Alkylen oder Arylenalkylen mit bis zu 12 C-Atomen bedeuten, oder, wenn $R_2$ für ein Wasserstoffatom steht, $R_3$ auch ein Oxyalkylen mit bis zu 12 C-Atomen bedeutet.

Die Alkylgruppe $R_1$ kann geradkettig oder verzweigt, unsubstituiert oder substituiert oder auch durch Äthersauerstoffatome unterbrochen sein. Geeignete Substituenten sind beispielsweise die Nitril- und die Nitrogruppe. Die Cycloalkylgruppe $R_1$ kann gegebenenfalls ebenfalls mit solchen Substituenten substituiert sein. Als Beispiele solcher Alkylgruppen seien genannt: Methyl, Cyanomethyl, Äthyl, n-Propyl, Isopropyl, n-Butyl, sek.-Butyl, n-Pentyl, 2-Pentyl, n-Hexyl, n-Heptyl, 3-Heptyl, n-Octyl und n-Dodecyl.

Die Arylgruppe $R_1$ kann unsubstituiert oder substituiert sein, wie zum Beispiel durch 1 oder 2 Halogenatome, besonders Chlor oder Brom, 1 oder 2 Nitrogruppen oder durch 1 oder 2 Alkyl- oder Alkoxygruppen mit 1-4, vor allem 1 oder 2 C-Atomen. Als Beispiele solcher Arylgruppen seien genannt: Phenyl, p-Nitrophenyl, 3,5-Dinitrophenyl, p-Tolyl, o-Tolyl, 4-Chlor-1-nitrophenyl, 2-Methoxyphenyl, Naphthyl, und β-Chlornaphthyl.

Der Rest $R_3$ stellt im wesentlichen einen linearen unsubstituierten Rest dar, wie zum Beispiel Methylen, Äthylen, Oxyäthylen, Butylen, oder Phenylenmethylen.

Vorzugsweise stehen in der Formel I $R_1$ für ein -H, $CH_3(CH_2)_n$, n = 0-6, 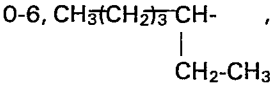 , $(CH_3)_2CH$-, $CH_3)_3$ C-, NC-$CH_2$-, 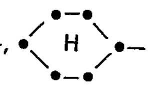 oder 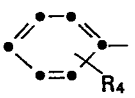 ,

wobei $R_4$ ein -H, -$CH_3$, -$C_2H_5$, -Cl, -Br, -$NO_2$ oder -$OCH_3$ bedeutet, und $R_3$ für -$CH_2$-, $-[O-(CH_2)_m]_p$, m und p je 1-6, wobei p vorzugsweise 1 oder 2 ist, oder

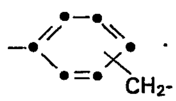 .

Die Verbindungen der Formel I können hergestellt werden, indem man 1 Mol eines N-Cyancarbonsäureamidsalzes der Formel II

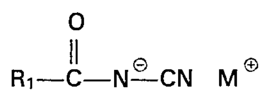 (II)

worin $M^{\oplus}$ für ein Natrium- oder Kaliumkation steht, mit 1 Mol einer Halogenverbindung der Formel III

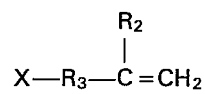 (III)

worin X für ein Chlor-, Brom- oder Jodatom steht, in einem polaren aprotischen Lösungsmittel umsetzt.

Die Verbindungen der Formel II und III stellen bekannte Verbindungen dar. Als Verbindungen der Formel II seien beispielsweise die Kalium- und insbesondere die Natriumsalze von Acetylcyanamid, Benzoylcyanamid und N-Cyancyclohexylcarbonsäureamid genannt.

Geeignete Verbindungen der Formel III sind beispielsweise Allylchlorid, Allylbromid, Methallylchlorid, β-Chloräthylvinyläther und Vinylbenzylchlorid.

Geeignete polare aprotische Lösungsmittel sind zum Beispiel Dimethylformamid, Dimethylacetamid, Dimethylpropionamid, N-Methylpyrrolidon, Dimethylsulfoxid, Sulfolan, Hexamethylphosphorsäuretriamid, Tetramethylharnstoff oder die zu synthetisierende Verbindung.

Die Menge des beim Verfahren zur Herstellung der Verbindungen der Formel I einzusetzenden polaren aprotischen Lösungsmittels ist nicht kritisch. Im allgemeinen wird das Lösungsmittel in solchen Mengen verwendet, dass die Ausgangsverbindung der Formel II als 5-70%ige Lösung, vorzugsweise als 10-50%ige Lösung, vorliegt.

Das Verfahren kann in einem weiten Temperaturbereich von etwa 20 bis 180°C durchgeführt werden. Die bevorzugte Umsetzungstemperatur liegt zwischen 40 und 120°C.

Die erfindungsgemässen N-Cyanacylamidverbindungen weisen viele Anwendungsmöglichkeiten auf. So können sie beispielsweise als Ausgangsstoffe zur Herstellung von Isomelaminen, als Härtungsmittel für Epoxidharze und zur Herstellung von linearen Homo- und Copolymeren, die thermisch vernetzbar sind, eingesetzt werden.

Bei der Herstellung von Isomelaminen aus den erfindungsgemässen Verbindungen werden durch Hydrolyse oder Alkoholyse der Verbindungen der Formel I N-Alkylcyanamide gebildet, die zu Trialkylisomelaminen trimerisierbar sind.

Es wurde ferner gefunden, dass die erfindungsgemässen N-Cyanacylamidverbindungen auch wertvolle Härtungsmittel für Epoxidharze darstellen.

Gegenstand der vorliegenden Erfindung ist somit auch die Verwendung der erfindungsgemässen Verbindungen in härtbaren, aus Epoxidharzen und den N-Cyanacylamidverbindungen bestehenden Mischungen.

In diesen härtbaren Mischungen wird die Menge der als Härtungsmittel eingesetzten N-Cyanacylamidverbindungen so berechnet, dass normalerweise 0,75 bis 1,25 Äquivalent N-Cyancarbonsäureamidgruppe auf 1 Epoxidäquivalent kommen. Vorzugsweise verwendet man die N-Cyanacylamidverbindungen und die Epoxidharzkomponente in äquivalenten Mengen,

Die erfindungsgemässen N-Cyanacylamidverbindungen können allein oder zusammen mit anderen polymerisierbaren Monomeren durch übliche Polymerisation in lineare Polymere übergeführt werden. Als Monomere, die den erfindungsgemässen Verbindungen zugesetzt werden können, kommen sowohl Verbindungen der Acrylsäurereihe, wie beispielsweise Ester aus Acrylsäure oder Methacrylsäure und Alkoholen oder Phenolen, z.B. Methacrylat, Butylacrylat, Methylmethacrylat oder Acrylnitril, Methacrylnitril und Äthylenglykoldimethacrylat in Frage, als auch andere reaktionsfähige, olefinisch ungesättigte Monomere, wie z.B. Styrol, Divinylbenzol, Vinylacetat, Maleinsäureanhydrid und die Halbester und Diester der Maleinsäure, wie beispielsweise Maleindimethyl- oder -dibutylester. Bevorzugte Monomere sind die (Meth)acrylsäurehydroxyalkylester, wie beispielsweise Acrylsäure-2-hydroxyäthylester, Methacrylsäure-2-hydroxyäthylester und (Meth)acrylsäure-2-hydroxypropylester.

Zur Polymerisation oder Copolymerisation verwendet man vorzugsweise die üblichen, freie Radikale bildenden Katalysatoren; genannt seien beispielsweise Hydrazinderivate, wie Hydrazinhydrochlorid, organometallische Verbindungen, wie Tetraäthylblei, sowie insbesondere aliphatische Azoverbindungen, wie α,α'-Azoisobutyrodinitril und organische Peroxide oder Persalze, wie beispielsweise Peressigsäure, Acetylperoxid, Chloracetylperoxid, Benzoylperoxid, Chlorbenzoylperoxid, Benzoylacetylperoxid, tert.-Butylhydroperoxid und ferner anorganische Peroxidverbindungen, wie Natriumperoxid, Alkalipercarbonate, Alkalipersulfate oder Alkaliperborate, und auch Wasserstoffperoxid, welches das teurere Benzoylperoxid vorteilhaft ersetzen kann. Ihr Zusatz bemisst sich in bekannter Weise nach dem gewünschten Reaktionsverlauf oder den gewünschten Eigenschaften des Polymerisates; vorteilhaft werden etwa 0,05 bis 10 Gewichtsprozent des Katalysators, berechnet auf das Gesamtgewicht der Monomer-Mischung eingesetzt, wobei die Gesamtmenge des Katalysators entweder zu Beginn oder portionenweise während des Verlaufes der Polymerisation zugesetzt wird.

In gewissen Fällen, insbesondere bei der Homopolymerisation, sind ionische Katalysatoren, wie zum Beispiel Lewis-Säure, einzusetzen. Bei der Polymerisation bzw. Copolymerisation können die üblichen Polymerisationsbedingungen bezüglich Temperatur und Medium (Lösungsmittel bzw. lösungsmittelfrei) angewendet werden.

Die erfindungsgemässen N-Cyanacylamidverbindungen bzw. deren Mischung mit anderen polymerisierbaren Monomeren können im Oberflächenschutz, als Imprägnierharze, Giessharze und insbesondere zur Herstellung von B-Stufenharzen und Verbundstoffen Verwendung finden.

Die erfindungsgemässen N-Cyanacylamidverbindungen bzw. deren Mischungen mit anderen polymerisierbaren Monomeren oder Epoxidharzen können ferner vor der Vernetzung bzw. Härtung in irgendeiner Phase mit üblichen Modifizierungsmitteln, wie Streck-, Füll- und Verstärkungsmitteln, Pigmenten, Farbstoffen, organischen Lösungsmitteln, Weichmachern, Verlaufmitteln, Thixotropiermitteln, flammhemmenden Stoffen, Formtrennmitteln versetzt werden.

Die folgenden Beispiele erläutern die Erfindung näher ohne sie einzuschränken.

*Beispiel 1*

*N-Cyan-N-β-methallylacetamid*

In einer Glasapparatur, ausgerüstet mit Rührer, Thermometer, Rückflusskühler und Trockenrohr werden 53,0 g (0,5 Mol) Acetylcyanamid-Natriumsalz und 49,8 g (0,5 Mol + 10% Überschuss) β-Methallylchlorid in 100 ml Dimethylformamid während 2 Stunden und 25 Minuten bei 124-130°C zur Reaktion gebracht. Anschliessend wird das Reaktionsgemisch abgesaugt, das Filtrat am Rotationsverdampfer bei 70°C im Vakuum eingeengt und der Rückstand durch fraktionierte Destillation gereinigt. Man erhält 46,8 g (67,7% der Theorie) einer farblosen, klaren Flüssigkeit, die bei 87°C/23,4 mbar siedet.

| Elementaranalyse: | berechnet | gefunden |
|---|---|---|
| | 60,85% C | 60,66% C |
| | 7,30% H | 7,46% H |
| | 20,28% N | 20,03% N |

Die Daten des H-NMR-Spektrums decken sich mit folgender Strukturformel:

$$CH_2{=}C(CH_3){-}CH_2{-}N{<}\begin{matrix}C(=O){-}CH_3\\CN\end{matrix}$$

*Beispiel 2*

*N-Cyan-N-vinylbenzylacetamid*

23,3 g (0,2 Mol + 10% Überschuss) Acetylcyanamid-Natriumsalz und 30,5 g (0,2 Mol) Vinylbenzylchlorid (technisches Isomerengemisch mit ca. 40% para- und 60% meta-Anteil) in 100 ml Dimethylformamid werden während 8 Stunden bei 48° bis 50°C umgesetzt, nach beendeter Reaktion abgesaugt, das Filtrat in 300 g Eis und 500 ml Wasser unter intensivem Rühren eingetragen und anschliessend mit Essigsäureäthylester extrahiert. Die Essigsäureäthylesterlösung wird mit wasserfreiem Natriumsulfat getrocknet, abgesaugt, Das Filtrat mit Aktivkohle entfärbt, die Lösung filtriert und das Filtrat am Rotationsverdampfer bei 40°C im Vakuum eingeengt. Der Rückstand wird bei 40°C/0,13 mbar bis zur Gewichtskonstanz getrocknet. Man erhält 34,9 g (87,1% der Theorie) einer bräunlichen, viskosen Flüssigkeit, die durch Kugelrohrdestillation bei 130-145°C/0,7 mbar gereinigt wird.

| Elementaranalyse: | berechnet | gefunden |
|---|---|---|
| | 71,98% C | 71,83% C |
| | 6,04% H | 6,31% H |
| | 13,99% N | 13,87% N |

Die Daten des H-NMR-Spektrums stimmen mit folgender Strukturformel überein:

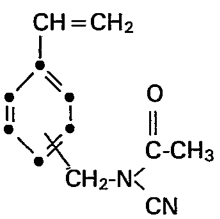

*Beispiel 3*

*N-Cyan-N-allylacetamid*

Analog Beispiel 1 werden 159,1 g (1,5 Mol) Acetylcyanamid-Natriumsalz und 137,8 g (1,5 Mol + 20% Überschuss) Allylchlorid in 400 ml Sulfolan während 9 Stunden und 45 Minuten bei 70°-127°C zur Reaktion gebracht und gemäss Beispiel 1 aufgearbeitet. Man erhält 121,7 g (65,4% der Theorie) eines farblosen Destillates, dessen Siedepunkt bei 98°C/43 mbar liegt.

| Elementaranalyse: | berechnet | gefunden |
|---|---|---|
| | 58,06% C | 58,09% C |
| | 6,50% H | 6,57% H |
| | 22,57% N | 22,56% N |

Die Daten des H-NMR-Spektrum stimmen mit folgender Strukturformel überein:

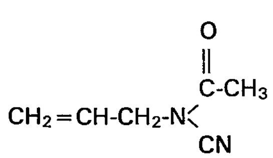

*Beispiel 4*

*N-Cyan-N-2-vinyloxyäthylacetamid*

Gemäss Beispiel 2 werden 106,2 g (1,0 Mol) Acetylcyanamid-Natriumsalz, 117,2 g (1,1 Mol) 2-Chloräthylvinyläther, 8,3 g (50 mMol) Kaliumjodid in 400 ml Dimethylformamid 1 Stunde und 5 Minuten bei 76-127°C zur Reaktion gebracht und analog Beispiel 1 aufgearbeitet. Nach fraktionierter Destillation des Rohproduktes erhält man 69,0 g (44,7% der Theorie) eines klaren, farblosen Destillates mit einem Siedepunkt von 128°C/29 mbar.

| Elementaranalyse: | berechnet | gefunden |
|---|---|---|
| | 54,54% C | 54,45% C |
| | 6,54% H | 6,65% H |
| | 18,17% N | 17,92% N |

Das $^1$H-NMR-Spektrum stimmt mit folgender Struktur überein:

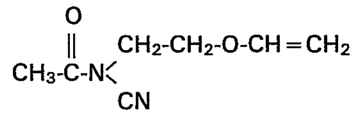

In den folgenden Anwendungsbeispielen I - VI wird das gemäss Beispiel 2 hergestellte N-Cyan-N-vinylbenzylacetamid als Monomeres zur Herstellung von Polymeren und als Härtungsmittel für Epoxidharze verwendet. Die Reaktivität von N-Cyan-N-vinylbenzylacetamid allein, in Mischung mit Katalysator oder mit Epoxidharz wird anhand der Gelierzeit und mittels der Thermoanalyse bestimmt. Glasumwandlungstemperatur und Zugscherfestigkeit dienen zur Charakterisierung der vernetzten Polymeren.

Die Messung der Gelierzeit wird bei verschiedenen Temperaturen vorgenommen. Dabei wird eine kleine Menge der zu prüfenden Substanz auf die Mitte einer auf die gewünschte Temperatur eingestellten Heizplatte (auch B-Zeitplatte genannt) gebracht und die Zeit bis zum Gelieren der Probe bestimmt.

Zur Bestimmung der Reaktivität mittels der Differential-Thermoanalyse (DTA) werden ca. 20 mg der zu prüfenden Substanz in einen speziell dafür geeigneten Aluminium-Tiegel eingewogen. Dieser Tiegel wird in der Messkammer des DTA-Geräts TA 2000 der Fa. Mettler-Instrumente AG, CH-Greifensee, mit einer Aufheizgeschwindigkeit von 4°C/Minute erwärmt und die Temperaturdifferenz gegenüber einem miterwärmten leeren Tiegel laufend aufgezeichnet. Aus der so erhaltenen Kurve werden die Temperaturen für den Reaktionsbeginn ($T_B$), für die maximale Reaktionsgeschwindigkeit ($T_{RGmax.}$) und für das Ende der Reaktion ($T_E$) abgelesen. Aus der Fläche unterhalb der erhaltenen Kurve und der Basislinie wird die Reaktionsenthalpie errechnet.

Zur Bestimmung der Glasumwandlungstemperatur werden 4 g der zu prüfenden Substanz jeweils in einen dünnwandigen Aluminium-Tiegel mit etwa 5 cm Durchmesser gegossen und darin ausgehärtet. Der so erhaltenen Scheibe wird eine Probe des vernetzten Polymeren entnommen an dem mit Hilfe der Dif-ferential-Thermoanalyse (DTA) der Glasumwandlungspunkt ermittelt wird. Im Umwandlungspunkt ändert sich die spezifische Wärme; diese Änderung wird als Wendepunkt in der vom DTA-Gerät TA-2000 der Fa. Mettler-Instrumente AG, CH-Greifensee aufgezeichneten Kurve registriert. Die Glasumwandlungstemperatur (GUT) erlaubt Rückschlüsse auf die Formbeständigkeit der erhaltenen Polymeren in der Wärme.

Zur Bestimmung der Zugscherfestigkeit wird eine kleine Menge der zu untersuchenden Substanz auf die Enden von Prüfstreifen aus Anticorodal B mit den Abmessungen 170 × 25 × 2,5 mm, die vorher durch Schleifen aufgerauht und durch Waschen mit Lösungsmittel entfettet wurden, aufgebracht. Je zwei dieser Prüfstreifen werden mit Hilfe einer Lehre so justiert, dass sich die mit der zu prüfenden Substanz bestrichenen Enden 12 mm überlappen. Mit einer Klemme wird solange fixiert, bis die als Klebemittel eingesetzte Substanz gemäss den Härtungsbedingungen gehärtet hat. Anschliessend wird die Zugscherfestigkeit der Klebverbindung nach DIN 53283 (DIN = Deutsche Industrie Norm) und das Mittel aus drei Probenmessungen errechnet.

*Anwendungsbeispiel I*

N-Cyan-N-vinylbenzylacetamid (CVBA) kann ohne Zusatz eines Katalysators, nur mittels Wärme in den Polymerzustand übergeführt werden. Dabei zeigt sich, dass CVBA ohne katalytisch wirkende Zusätze reaktiv ist. Nach einer Härtung bei 120°C wird ein Formstoff mit einer GUT von 88°C und einer Zugscherfestigkeit von 4,7 N/mm$^2$ erhalten. Eine Nachhärtung bei 180°C erhöht die GUT nur um 5°C, hebt die Zugscherfestigkeit aber um 50% an.

Die Reaktivität von CVBA und die Eigenschaften des Polymeren sind in Tabelle 1 angegeben.

*Anwendungsbeispiel II*

Die Zugabe von 1 Teil tert.-Butylperoxipivalat auf 100 Teile CVBA bringt, gemssen an der Gelierzeit und gemäss Thermoanalyse, eine Erhöhung der Reaktivität. Der nach Härtung bei 120°C erhaltene Formstoff besitzt eine GUT von 84°C und eine Zugscherfestigkeit von 4,4 N/mm$^2$. Eine Nachhärtung bei 180°C erhöht die GUT nur um 6°C, hebt aber die Zugscherfestigkeit um etwa 65% an (s. auch Angaben in Tabelle 1).

*Anwendungsbeispiel III*

Zu 100 Teilen CVBA werden 1 Teil tert.-Butylperoxipivalat sowie 2 Teile einer 4 Gewichts-%igen Cooctoatlösung in Styrol beigemischt. Wie aus Tabelle 1 entnommen werden kann, besitzt der nach Härtung bei 120°C erhaltene Formstoff eine GUT von 87°C und eine Zugscherfestigkeit von 3,4 N/mm$^2$. Eine Nachhärtung bei 180°C erhöht die GUT um 8°C und die Zugscherfestigkeit um 50%.

Tabelle 1

| Anwendungsbeispiel | | | I | | II | | III | |
|---|---|---|---|---|---|---|---|---|
| Substanz | | | CVBA tel quel | | 100 Teile CVBA 1 Teil tert.-Butylperoxipivalat | | 100 Teile CVBA 1 Teil tert.-Butylperoxipivalat 2 Teile Co-octoat (4%ig) | |
| Gelierzeit | bei 180°C | | 40″ | | 17″ | | 15″ | |
| (′ = Minuten | bei 160°C | | 2′20″ | | 35″ | | 25″ | |
| ″ = Sekunden) | bei 140°C | | 3′50″ | | 40″ | | 35″ | |
| Thermoanalyse | $T_B$ | °C | 101 | | 54 | | 50 | |
| | $T_{RGmax.}$ | °C | 160 | | 106 | | 96 | |
| | $T_E$ | °C | 207 | | 196 | | 135 | |
| Reaktionsenthalpie pro Mol (kJ) | | | 44,6 | | 48,5 | | 51,1 | |
| Härtung (Stunden/°C) | | | 2/80° + 6/120° | Nachhärtung 6/180° | 2/80° + 6/120° | Nachhärtung 6/180° | 2/80° + 6/120° | Nachhärtung 6/180° |
| Glasumwandlungstemperatur (°C) | | | 88 | 93 | 84 | 90 | 87 | 95 |
| Zugscherfestigkeit (N/mm$^2$) | | | 4,7 | 6,6 | 4,4 | 7,2 | 3,4 | 5,1 |

Härten von Epoxidharzen:

Um CVBA im festen, unmodifizierten Bisphenol-A--diglycidyläther mit einem Epoxidgehalt von 2,1 Aeq./kg und einem Erweichungsbereich von etwa 50°C und einer Viskosität von 85'000 mPa.s bei 100°C (Epoxidharz I) zu vermengen, werden Härtungskatalysatoren und -beschleuniger in CVBA gelöst, mit dem feinpulverisierten Epoxidharz I von Hand grob vermengt und anschliessend über einen Dreiwalzenstuhl abgerieben.

*Anwendungsbeispiel IV*

CVBA und Epoxidharz I werden im Verhältnis von 1 Mol pro 1 Epoxidäquivalent wie oben beschrieben vermengt. Nach Aushärtung bei 140°C wird ein Formstoff mit einer GUT von 88°C und einer Zugscherfestigkeit von 22,1 N/mm$^2$ erhalten. Eine Nachhärtung bei 180°C bewirkt eine GUT-Erhöhung von 7°C und ein Anheben der Zugscherfestigkeit um über 30% auf 29,3 N/mm$^2$.

*Anwendungsbeispiel V*

Zu der in Anwendungsbeispiel IV verwendeten härtbaren Epoxidharzmischung werden 0,005 Mol/Epoxidäquivalent 1-Methylimidazol als Beschleuniger zugegeben. Der nach Aushärtung bei 140°c erhaltene Formstoff besitzt eine GUT von 85°C und eine Zugscherfestigkeit von 13,4 $N/mm^2$. Eine Nachhärtung bei 180°C erhöht die GUT um 8°C und hebt die Zugscherfestigkeit um etwa 50% an.

*Anwendungsbeispiel VI*

Zu der in Anwendungsbeispiel IV verwendeten härtbaren Epoxidharzmischung werden sowohl tert.-Butylperoxipivalat und eine 4 Gewichts-%ige Lösung Co-octoat in Styrol als Beschleuniger hinzugegeben. Bei der Härtung gibt die Thermoanalyse 2 exotherme Reaktionen an. Der nach der Härtung bei 120°C erhaltene Formstoff weist eine GUT von 77°C und eine Zugscherfestigkeit von 15,2 $N/mm^2$ auf. Eine Nachhärtung bei 180°C erhöht die GUT um 13°C und die Zugscherfestigkeit um 40% (s. Tabelle 2).

Tabelle 2

| Anwendungsbeispiel | | IV | | V | | VI | |
|---|---|---|---|---|---|---|---|
| Epoxidharz I | | Jeweils 100 Teile | | | | | |
| CVBA | | Jeweils 38,6 Teile | | | | | |
| Zusätze | | — | | 0,1 Teil Methylimidazol | | 0,4 Teile tert.-Butylperoxipivalat<br>0,4 Teile Co-octoat (4%ig) | |
| Gelierzeit<br>(' = Minuten<br>'' = Sekunden) | 180°C<br>160°C<br>140°C | 11'<br>41'<br>52' | | 4'10''<br>18'<br>24'30'' | | 6'30''<br>33'<br>43' | |
| Thermoanalyse | $T_B$ °C | 124 | | 101 | | 64 | 131 |
| | $T_{RGmax.}$ °C | 189 | | 156 | | 98 | 188 |
| | $T_E$ °C | 262 | | 241 | | 131 | 241 |
| Reaktionsenthalpie pro Epoxidäquivalent | (kJ) | 161,6 | | 178,6 | | 32,0 | 117,6 |
| Härtung (Stunden/°C) | A = 8/140<br>B = 8/140 + 6/180 | A | B | A | B | A | B |
| Glasumwandlungstemperatur (°C) | | 88 | 95 | 85 | 93 | 77 | 90 |
| Zugscherfestigkeit ($N/mm^2$) | | 22,1 | 29,3 | 13,4 | 20,2 | 15,2 | 21,1 |

*Anwendungsbeispiel VII*

7,44 g (0,06 Mol) N-Cyan-N-allylacetamid werden mit einer Lösung von 3,4 g (0,607 Mol) KOH in 10 ml $H_2O$ versetzt. nach Zugabe von 6 ml Äthanol wird das Gemisch homogen und reagiert exotherm. Nach kurzer Zeit scheidet sich ein Öl ab, das sich durch Zugabe von 3 ml Äthanol und kurzes Aufkochen in Lösung bringen lässt. Nach dem Erkalten wird mit 10 ml $H_2O$ verdünnt und mit 3 Portionen Chloroform (20, 10 und 10 ml) extrahiert. Einengen der Extrakte am Rotationsverdampfer ergibt 4,77 g eines farblosen Öls, das zur Reinigung im Kugelrohrofen destilliert wird. Man erhält 3,54 g (71,9% d. Th.) 1,3,5-Triallylisomelamin mit einem Siedepunkt von 105-115°C bei 0,026 mbar, das bei Raumtemperatur kristallin erstarrt und gaschromatographisch zu über 97% rein ist.

Analyse $C_{12}H_{18}N_6$ (M = 246,32):

| | berechnet | | gefunden | |
|---|---|---|---|---|
| | 58,52% | C | 58,32% | C |
| | 7,37% | H | 7,34% | H |
| | 34,12% | N | 34,57% | N |

*Anwendungsbeispiel VIII*

In ein Gemisch von 154 Teilen (1 Mol) N-Cyan-N-2-vinyloxäthylacetamid und 98 Teilen (1 Mol) Maleinsäureanhydrid werden 1,3 Teile (0,5 Gew.-%) Dibenzoylperoxid zugegeben. Nach einigen Minuten erhält man eine sehr niederviskose klare Lösung. Gemessen an der Gelierzeit und der Thermoanalyse wird gute Reaktivität festgestellt. Der nach Härtung während 6 Stunden bei 120°C erhaltene Formstoff besitzt eine Glasumwandlungstemperatur von 95°C, die durch Nachhärtung, 6 Stunden bei 180°C, um 35°C erhöht werden kann.

**Patentansprüche**

1. N-Cyanacylamidverbindungen der Formel I

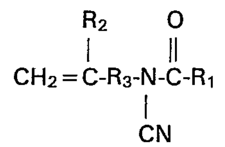

(I)

worin $R_1$ ein Wasserstoffatom, Alkyl mit 1-20 C-Atomen, Cycloalkyl mit 5-8 C-Atomen oder Aryl mit 6 oder 10 Ring-C-Atomen, $R_2$ ein Wasserstoffatom oder Alkyl mit 1-4 C-Atomen und $R_3$ ein Alkylen oder Arylenalkylen mit bis zu 12 C-Atomen bedeuten, oder, wenn $R_2$ für ein Wasserstoffatom steht, $R_3$ auch ein Oxyalkylen mit bis zu 12 C-Atomen bedeutet.

2. Verbindungen gemäss Anspruch 1, worin in Formel I $R_1$ für ein -H, $CH_3(CH_2)_n$, n = 0-6, $CH_3(CH_2)_3\underset{\underset{CH_2-CH_3}{|}}{CH}-$ , $(CH_3)_2CH-$, $(CH_3)_3C-$, C-$CH_2$-, 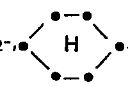 oder 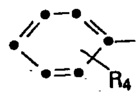, wobei $R_4$ ein -H, $-CH_3$, $-C_2H_5$, -Cl, -Br, $-NO_2$ oder $-OCH_3$ bedeutet, und $R_3$ für $-CH_2-$, $-[O-(CH_2)_m]_p$, m und p je 1-6, oder 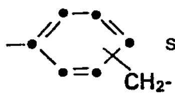 stehen.

3. N-Cyan-N-vinylbenzylacetamid, N-Cyan-N-β-methallylacetamid und N-Cyan-N-allylacetamid als Verbindung der Formel I gemäss Anspruch 1.

4. Verfahren zur Herstellung von N-Cyanacylamidverbindungen der Formel I gemäss Anspruch 1, dadurch gekennzeichnet, dass man 1 Mol eine N-Cyancarbonsäureamidsalzes der Formel II

$$R_1-\overset{O}{\overset{\|}{C}}-\overset{\ominus}{\underline{N}}-CN \quad M^{\oplus} \qquad (II)$$

worin $M^{\oplus}$ für ein Natrium- oder Kaliumkation steht, mit 1 Mol einer Halogenverbindung der Formel III

$$X-R_3-\overset{R_2}{\overset{|}{C}}=CH_2 \qquad (III)$$

worin X für ein Chlor-, Brom- oder Jodatom steht, in einem polaren aprotischen Lösungsmittel umsetzt.

5. Verwendung der N-Cyanacylamidverbindungen gemäss Anspruch 1 zum Härten von Epoxidharzen.

6. Verwendung der N-Cyanacylamidverbindungen gemäss Anspruch 1, gegebenenfalls in Mischung mit anderen polymerisierbaren Monomeren, zur Herstellung von linearen Homo- bzw. Copolymeren.

**Claims**

1. An N-cyanoacylamide compound of the formula I

$$CH_2=\overset{R_2}{\overset{|}{C}}-R_3-\underset{\underset{CN}{|}}{N}-\overset{O}{\overset{\|}{C}}-R_1 \qquad (I)$$

in which $R_1$ is a hydrogen atom, alkyl having 1-20 C atoms, cycloalkyl having 5-8 C atoms or aryl having 6 or 10 ring C atoms, $R_2$ is a hydrogen atom or alkyl having 1-4 C atoms and $R_3$ is an alkylene or arylenealkylene group having not more than 12 C atoms, or, if $R_2$ is a hydrogen atom, $R_3$ is also an oxyalkylene group having not more than 12 C atoms.

2. A compound according to claim 1, in which, in formula I $R_1$ is -H, $CH_3(CH_2)_n$, n = 0-6, $CH_3(CH_2)_3\underset{\underset{CH_2-CH_3}{|}}{CH}-$ , $(CH_3)_2CH-$, $(CH_3)_3C-$, NC-$CH_2$-, 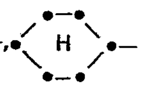 or 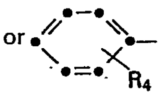, in which $R_4$ is -H, $-CH_3$, $-C_2H_5$, -Cl, -Br, $-NO_2$ or $-OCH_3$ and $R_3$ is $-CH_2-$, or $-[O-(CH_2)_m]_p$, m and p each being 1-6, or is 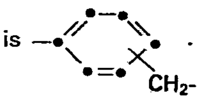 .

3. N-cyano-N-vinylbenzylacetamide, N-cyano-N-β-methallylacetamide and N-cyano-N-allylacetamide as a compound of the formula I according to claim 1.

4. A Process for the preparation of an N-cyanoacylamide compound of the formula I according to claim 1, which comprises reacting 1 mol of an N-cyanocarboxylic acid amide salt of the formula II

$$R_1-\overset{O}{\overset{\|}{C}}-\overset{\ominus}{\underline{N}}-CN \quad M^{\oplus} \qquad (II)$$

in which $M^{\oplus}$ is a sodium or potassium cation, with 1 mol of a halogen compound of the formula III

$$X-R_3-\overset{R_2}{\overset{|}{C}}=CH_2 \qquad (III)$$

in which X is a chlorine, bromine or iodine atom, in a polar, aprotic solvent.

5. Use of an N-cyanoacylamide compound according to claim 1 for curing epoxide resins.

6. Use of an N-cyanoacylamide compound according to claim 1, optionally in admixture with other polymerisable monomers, for the preparation of linear homopolymers or copolymers.

**Revendications**

1. N-Cyano-N-acyl-amines qui répondent à la formule I

$$CH_2=\overset{R_2}{\overset{|}{C}}-R_3-\underset{\underset{CN}{|}}{N}-\overset{O}{\overset{\|}{C}}-R_1 \qquad (I)$$

dans laquelle

$R_1$ représente un atome d'hydrogène, un alkyle contenant de 1 à 20 atomes de carbone, un cycloalkyle contenant de 5 à 8 atomes de carbone ou un aryle contenant de 6 à 10 atomes de carbone dans son noyau,

$R_2$ représente un atome d'hydrogène ou un alkyle contenant de 1 à 4 atomes de carbone et,

$R_3$ représente un alkylène ou un arylène-alkylène contenant au plus 12 atomes de carbone ou encore, lors que $R_2$ représente un atome d'hydrogène, $R_3$ peut également représenter un oxy-alkylène contenant au plus 12 atomes de carbone.

2. Composés selon la revendication 1 dans la formule I desquels $R_1$ représente un atome d'hydrogène ou un radical $CH_3(CH_2)_n$ [l'indice n désignant un nombre de 0 à 6], $CH_3(CH_2)_3$ CH- , $(CH_3)_2CH-$,
$CH_2-CH_3$

$(CH_3)_3$ C-, NC-$CH_2$-, 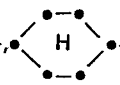 —ou 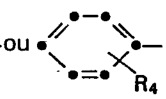 , [le symbole $R_4$ désignant -H, $-CH_3$, $-C_2H_5$, -Cl, -Br, $-NO_2$ ou $-OCH_3$], et $R_3$ représente un radical $-[O-(CH_2)_m]_p$, [m et p représentant chacun un nombre de 1 à 6] ou

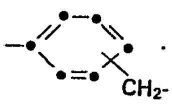 .

3. Composés de formule I selon la revendication 1, en l'espèce le N-cyano-N-vinylbenzylacétamide, le N-cyano-N-(β-méthallyl)-acétamide et le N-cyano-N-allyl-acétamide.

4. Procédé de préparation de N-cyano-N-acyl-amines de formule I selon la revendication 1, procédé caractérisé en ce qu'on fait réagir 1 mol d'un sel N-cyano-carboxamide répondant à la formule II:

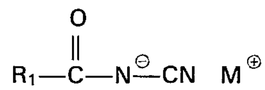 (II)

dans laquelle $M^{\oplus}$ représente un cation de sodium ou de potassium, avec 1 mol d'un composé halogéné répondant à la formule III:

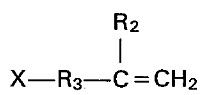 (III)

dans laquelle X représente un atome de chlore, de brome ou d'iode, dans un solvant aprotique polaire.

5. Application des N-cyano-N-acyl-amines selon la revendication 1 pour le durcissement de résines époxidiques.

6. Application des N-cyano-N-acyl-amines selon la revendication 1, éventuellement en mélange avec d'autres monomères polymérisables, pour la préparation d'homopolymères ou de copolymères linéaires.